# EUROPÄISCHE PATENTSCHRIFT

(11) **EP 2 455 384 B1**
(45) Veröffentlichungstag und Bekanntmachung des Hinweises auf die Patenterteilung: **20.03.2013**
(21) Anmeldenummer: 11188780.8
(22) Anmeldetag: 11.11.2011
(51) Int. Cl.: C07F 7/12

(54) **Verfahren zum Aufarbeiten von flüssigen Rückständen der Direktsynthese von Organochlorsilanen**
Process for workup of liquid residues of the direct synthesis of organochlorosilanes
Procédé de traitement de résidus liquides de la synthèse directe de silanes organochlorés

(30) Priorität: 23.11.2010 DE 102010061814
(43) Veröffentlichungstag der Anmeldung: 23.05.2012
(73) Patentinhaber: Wacker Chemie AG, 81737 München (DE)
(72) Erfinder: Tamme, Gudrun, 01468 Moritzburg / OT Boxdorf (DE); Mautner, Konrad, 84489 Burghausen (DE); Geißler, Werner, 01561 Thiendorf / OT Lötzschen (DE)
(74) Vertreter: Fritz, Helmut

(56) Entgegenhaltungen:
- EP-A1- 0 332 075
- DE-T2- 69 416 623
- BASF: "Catalyst", Chemicals & Performance Products , 2004, Seiten 1-2, XP002666592, Gefunden im Internet: URL:http://www.basf.co.kr/02_products/03_c hemicals/catalysts&inorganic_chemicals/cat alyst_01.html [gefunden am 2012-01-04]

## Beschreibung

Die Erfindung ein Verfahren zur thermischen Spaltung der hochsiedenden Rückstände der Direktsynthese nach Müller-Rochow in Silane mit Chlorwasserstoff.

Bei der Direktsynthese von Organochlorsilanen der Formel RₐH_{b}SiCl_{4-a-b} mit a = 1 - 4 und b = 0,1 oder 2 aus Siliciummetall und Alkylchloriden, wobei R = Methyl besonders bevorzugt ist, entstehen als Nebenprodukte Oligosilane, Carbosilane, Siloxane und hochsiedende Crackprodukte. Darüber hinaus finden sich im Destillationsrückstand Feststoffe aus der Direktsynthese, die als Feinstanteil auch durch Cyclone und Filter nicht zurückgehalten werden. Die Feststoffe bestehen aus Silicium, Metallchloriden, Metallsiliciden und Ruß.

Den überwiegenden Teil dieser Destillationsrückstände machen die Oligosilane, besonders die Disilane R_{C}Cl_{6-C}Si₂, mit c = 0 - 6, aus. Deshalb wurden früh Verfahren entwickelt, die Disilane in Monosilane überzuführen. Das gelingt z.B. durch aminkatalysierte Spaltung mit Chlorwasserstoff, beispielhaft beschrieben in US 2,709,176. Spaltbar nach diesem Verfahren sind allerdings nur Disilane mit weniger als 4 Methylgruppen. Darüber hinaus müssen die Disilane vorher von den festen Rückständen abgetrennt werden, da diese Rückstände, wie beispielsweise Aluminiumchlorid, als Katalysatorgifte wirken.

Um auch die sogenannten nichtspaltbaren Disilane zu verwerten wurden Verfahren entwickelt, in denen nichtspaltbare Disilane in spaltbare Disilane überführt und dann gespalten werden, z.B. US 4,393,229, in denen diese Disilane direkt an speziellen, meist edelmetallhaltigen Katalysatoren mit HCl gespalten werden, z.B. DE 44 31 995 oder in denen Disilane mit Wasserstoff an Metallkatalysatoren gespalten werden, z.B. US 4,079,071. Der Vorteil der Hydrierung liegt darin, dass auch Carbosilane des Typs R'₃Si-CH₂-SiR'₃, mit R' = H, C₁-C₄-Alkyl oder Halogen, zu wasserstoffhaltigen Monosilanen gespalten werden können. Nachteilig an metallkatalysierten Umsetzungen ist immer die Vergiftungsneigung der Katalysatoren durch Verunreinigungen aus dem Rückstand. Hydrierungen erfordern zudem höhere Drücke. Dadurch steigt der apparative Aufwand deutlich an.

Eine Kombination der letztgenannten Verfahren in einem Schritt beschreibt US 5,430,168, wobei auf einen Zusatz von Metallkatalysatoren verzichtet werden kann, nicht jedoch auf höhere Drücke.

In DE 936 444 ist ein Verfahren beschrieben, bei dem unkatalysiert und rein thermisch, höhersiedende Rückstände der Direktsynthese von Methylchlorsilanen im Autoklav oder im Leerrohr mit Chlorwasserstoff bei Temperaturen von 400 - 900°C in monomere Silane umgewandelt werden. Dort wird als großer Vorteil bei dem Einsatz eines Rohrreaktors die geringe Verkokungsneigung hervorgehoben, durch die der Prozess über eine längere Zeit laufen kann.

Es müssen jedoch die Rückstände vorbehandelt werden, die durch ihren Feststoffgehalt sonst schnell zum Zuwachsen von Reaktionsrohren führen können. DE 10354262 beschreibt die Spaltung unter Minimierung von festen Rückständen an der Reaktorwand, indem die notwendige Reaktionstemperatur über den Chlorwasserstoffstrom und nicht über den Apparatemantel eingebracht wird.

In DE 19711693 werden zusätzlich drehbare Einbauten im Reaktionsrohr beschrieben, die Anbackungen abschaben.

Die Spaltung feststoffhaltiger hochsiedender Methylchlorsilanrückstände mit Chlorwasserstoff nach DE 10039172 in einer Siliziumwirbelschicht bringt zwar gute Spaltergebnisse, das bei diesem Verfahren erhältliche Produktgemisch mit Trichlorsilan, Siliziumtetrachlorid und dem Methylchlorsilangemisch erfordert einen aufwändigeren Trennprozess, denn es passt großtechnisch weder zu einer Trichlorsilananlage noch zu einer Methylchlorsilananlage.

EP 635510 beschreibt die Umsetzung eines feststoffhaltigen Hochsiedergemisches in einem Fliessbett an platinhaltigem Aluminiumoxidträger, Aluminiumchloridträger oder Zeolith, einem Alumosilikat. Edelmetallhaltige Katalysatoren sind jedoch recht kostspielig. Aluminiumchloridträger und Zeolithe setzen unter den Verfahrensbedingungen Aluminiumchlorid frei, das nur schwer aus dem hergestellten Silangemisch abtrennbar ist.

Gegenstand der Erfindung ist ein Verfahren zur thermischen Spaltung der hochsiedenden Rückstände der Direktsynthese nach Müller-Rochow in Silane mit Chlorwasserstoff in einer Wirbelschicht aus siliciumdioxidhaltigen, keramischen oder mineralischen, aluminiumfreien Partikeln, deren Siliciumdioxidgehalt mindestens 90 Gew.-% beträgt.

Das Verfahren ist sehr einfach durchzuführen. Es können alle flüssigen, auch feststoffhaltige Rückstände der Direktsynthese von Organochlorsilanen nach Müller-Rochow bei geringen Drücken aufgearbeitet und die siliciumorganischen Anteile in verwertbare Monosilane umgewandelt werden. Feststoffablagerungen an den Reaktorwänden werden weitestgehend vermieden.

Die Rückstände der Direktsynthese weisen vorzugsweise einen Siedepunkt über 70 °C, insbesondere von mindestens 100°C bei 1013 hPa auf.

Beim Verfahren werden bevorzugt höhermolekulare Bestandteile der Rückstände in Monosilane gespalten. Es werden vorzugsweise die Oligosilane und insbesondere die Disilane der allgemeinen Formel R_{C}Cl_{6-c}Si₂, mit c = 0 - 6, R = Alkyl gespalten. Die Rückstände der Direktsynthese können Metalle oder deren Verbindungen in gelöster oder fein suspendierter Form enthalten. Insbesondere weisen die Rückstände Metalle aus der Gruppe Al, Cu, Zn, Sn, Fe, Ti und/oder deren Verbindungen auf. Die Rückstände können noch weitere Feststoffe, wie Silicium und Ruß enthalten.

Im Verfahren werden keine Katalysatoren und keine weiteren Einsatzstoffe eingesetzt.

Vorzugsweise werden Methylchlorsilane der allgemeinen Formel MeₐH_{b}SiCl_{4-a-b} hergestellt, in der Me einen Methylrest, a die Werte 1, 2 oder 3 und b die Werte 0 oder 1 bedeuten.

Als siliciumdioxidhaltige, aluminiumfreie Partikel können siliciumdioxidhaltige keramische oder mineralische Materialien, wie Quarz, Keramik oder säuregewaschener und geglühter Sand eingesetzt werden. Der Siliciumdioxidgehalt beträgt mindestens 90 Gew.-%, insbesondere mindestens 99 Gew.-%. Die siliciumdioxidhaltigen, aluminiumfreien Partikel enthalten vorzugsweise höchstens 0,1 Gew.-%, insbesondere höchstens 0,01 Gew.-% Aluminium. Besonders bevorzugt ist Quarz.

Die Partikel werden in einer für den verwendeten Reaktortyp günstigen Korngrößenverteilung eingesetzt. Vorzugsweise beträgt die Korngröße der Partikel mindestens 50 µm, insbesondere mindestens 80 µm und vorzugsweise höchstens 1000 µm, insbesondere höchstens 500 µm.

Die Rückstände der Direktsynthese mit einem Siedepunkt über 70 °C werden zusammen mit Chlorwasserstoff in einen Wirbelschichtreaktor eingespeist. Die Vermischung kann vor oder erst im Reaktor geschehen, wenn ein konischer Anströmboden eingesetzt wird. Liegt das Wirbelbett auf einer Gasverteilerplatte, erfolgt die Anströmung mit Chlorwasserstoff von unten, während der umzusetzende flüssige Rückstand oberhalb der Platte in geeigneter Weise, gegebenenfalls mit einer Teilmenge Chlorwasserstoff verdüst, eingebracht wird.

Eingesetzt wird mindestens die den im Rückstand enthaltenen Oligosilanen, insbesondere Disilanen entsprechende molar äquivalente Menge Chlorwasserstoff, jedoch vorzugsweise nicht mehr als die für die Erhaltung einer Wirbelschicht notwendige Menge. Bevorzugt eingesetzt wird die 1,1 - 10 fache molare Menge. Der Rückstand und der Chlorwasserstoff können sowohl vorgeheizt, bevorzugt durch Abwärmenutzung, als auch bei Umgebungstemperatur in den Reaktor dosiert werden, wobei die Ströme bevorzugt kontinuierlich dosiert werden.

Der Wirbelschichtreaktor besteht aus einem Mantel, der direkt oder indirekt bis 650 °C beheizbar ist. Zusätzlich kann der Reaktor mit einem oder mehreren Temperierfingern ausgestattet sein. Zur Beheizung kommen hochtemperaturbeständige Wärmeträgeröle, elektrische Widerstandsbeheizung, Induktionsheizung oder Kombinationen davon in Frage.

Der Reaktor wird bevorzugt bei mindestens 400°C, insbesondere mindestens 500°C und vorzugsweise höchstens 650°C, insbesondere höchstens 600°C betrieben.

Der Druck beträgt vorzugsweise mindestens 50 hPa, insbesondere mindestens 1000 hPa bar und vorzugsweise höchstens 10000 hPa, insbesondere höchstens 3000 hPa.

Die Wirbelschicht verhindert eventuelle Anbackungen und zerkleinert diese. Abscheidungen am Korn werden zerrieben und mit dem Gasstrom ausgetragen. Die Hitzebehandlung bringt als positiven Nebeneffekt eine Sinterung der Feststoffpartikel mit sich, dadurch lassen sich schwer filtrierbare, gegebenenfalls kolloidal verteilte Feststoffe in filtrierbare Anteile überführen bzw. über Zyclone als Pulver ausschleusen und nach bekannten Verfahren zur Behandlung von Staubrückständen aus der Direktsynthese verarbeiten.

Das austretende Gemisch wird vorzugsweise kondensiert, gegebenenfalls von Feststoffen befreit und kann dem bei der Direktsynthese erzeugtem Silangemisch wieder zugeführt werden oder auch separat in Reinsubstanzen aufgetrennt werden. Überschüssiger Chlorwasserstoff kann nach bekannten Methoden zurückgewonnen und der Reaktion wieder zugeführt werden.

In den folgenden Beispielen sind, falls jeweils nicht anders angegeben, alle Mengen- und Prozentangaben auf das Gewicht bezogen, alle Drücke 1000 hPa (abs.) und alle Temperaturen 20°C.

### Beispiel 1 (analog DE 936 444; nicht erfindungsgemäß):

In ein leeres, waagerechtes Stahlrohr mit 700 mm Länge und 25 mm Innendurchmesser, das sich in einem Rohrofen befand, wurden 180 ml/h hochsiedender Rückstand der Silansynthese mit einem Siedepunkt > 150 °C zusammen mit 25 1/h gasförmigem Chlorwasserstoff im Gleichstrom bei Raumtemperatur und Umgebungsdruck dosiert. Der Rohrofen war auf eine Temperatur von 550 °C eingestellt. Der hochsiedende Rückstand bestand aus 80 % Disilanen (Mischung aus 1,1,2,2-Tetrachlordimethyldisilan, 1,1,2-Trichlortrimethyldisilan und 1,2-Dichlortetramethyldisilan, 2 % Festanteilen und 18 % Siloxanen und Carbosilanen. Eine exaktere Zuordnung war aufgrund der Vielzahl von Nebenprodukten schwierig. Nach 17 Betriebsstunden wurde der Versuch abgebrochen, da der Rohrreaktor in der Reaktionszone durch Feststoff und Crackprodukte zugewachsen war.

Während des Versuchs resultierte ein Spaltsilan mit in Tabelle 1 angegebener Zusammensetzung:

| Substanz | Anteil im Spaltsilan [Gew.-%] |
|---|---|
| Dimethylchlorsilan | 1,00 |
| Methyldichlorsilan | 10,00 |
| Trimethylchlorsilan | 2,00 |
| Methyltrichlorsilan | 35,00 |
| Dimethyldichlorsilan | 32,00 |
| Feststoffe | 3,00 |
| Sonstige | 17,00 |

### Beispiele 2 bis 4 (erfindungsgemäß)

In einen Laborwirbelschichtreaktor (Länge 500 mm, Durchmesser 40 mm)aus Glas mit eingebauter Fritte als Gasverteiler und einer Füllung mit 270g Quarzpulver einer Kornfraktion von 100-315 µm, wurden 25 1/h gasförmiger Chlorwasserstoff bei Raumtemperatur und Umgebungsdruck zur Erzeugung einer Wirbelschicht eingeleitet. Der Reaktor wurde mittels Elektroheizung auf 550 °C beheizt. Das umzusetzende Hochsiedergemisch wurde mittels Pumpe oberhalb der Fritte mit 60g/h verdüst. Auch nach 50 Betriebsstunden wurde im Reaktor und auf dem unverfärbten Quarz kein Belag gefunden. Während der Versuche resultierten folgende Spaltsilane aus verschiedenen Hochsiedergemischen mit den in Tabelle 2 angegebenen Zusammensetzungen der Produktgemische:

**Tabelle 2:**

| | Beispiel | | Beispiel | | Beispiel | |
|---|---|---|---|---|---|---|
| | 2 | | 3 | | 4 | |
| | Hoch-Siedergemisch A (Gew-%) | Produkt Gemisch A (Gew%) | Hoch-Siedergemisch B (Gew-%) | Produkt Gemisch B (Gew%) | Hoch-Siedergemisch C (Gew-%) | Produkt Gemisch C (Gew%) |
| HM2 | | 0, 9 | | | | 1,8 |
| Sitri | | 1,1 | | 4,4 | | |
| HM | 0, 1 | 19,8 | 0, 1 | 20,9 | | 1,4 |
| M3 | 0, 1 | 1,4 | 0, 1 | 4, 1 | | 5,3 |
| SiCl4 | | 0,7 | | | | 0, 1 |
| M1 | | 39,4 | | 27 | | 6,5 |
| M2 | 1,9 | 23, 9 | 9, 6 | 27 | 3, 0 | 20,8 |
| EMDCS/ETS | 0, 1 | 0, 4 | 1,6 | 1,6 | 6, 5 | 7,2 |
| M6-Di | 0, 1 | | 1,4 | 0, 1 | 3,3 | 0,5 |
| M5-Di | 0,3 | 0,2 | 4, 6 | 1,0 | 15,8 | 3,9 |
| M4-Di-uns | 1,1 | 0, 8 | 1,2 | 0,5 | 1,1 | 1,2 |
| M4-Di-sym | 0, 82 | 0,86 | 6,5 | 0, 8 | 23, 6 | 2,5 |
| M3-Di | 28, 6 | 0, 1 | 20,4 | 0,7 | 8, 1 | 2,9 |
| M2-Di | 47, 9 | 0, 9 | 42,4 | 0,7 | 4,3 | 0,7 |

Die Abkürzungen bedeuten:
- HM2: Dimethylchlorsilan
- Sitri: Trichlorsilan
- HM: Methyldichlorsilan
- M3: Trimethylchlorsilan
- M1: Methyltrichlorsilan
- M2: Dimethyldichlorsilan
- EMDCS/ETS: Ethylmethyldichlorsilan / Ethyltrichlorsilan
- M6-Di: Hexamethyldisilan
- M5-Di: Chlorpentamethyldisilan
- M4-Di-uns: Dichlortetramethyldisilan unsymmetrisch
- M4-Di-sym: Dichlortetramethyldisilan symmetrisch
- M3-Di: Trichlortrimethyldisilan
- M2-Di: Tetrachlordimethyldisilan

Zu 100% fehlende Substanzen sind nicht näher genannte Zwischen- und Höhersieder. Im Abgas der Reaktion sind neben nicht umgesetztem Chlorwasserstoff und nicht vollständig kondensierten Silanen bis 3 Gew.-% Wasserstoff und Kohlenwasserstoffe wie Methan, Ethan, Ethen, Butan, Buten.

## Patentansprüche

1. Verfahren zur thermischen Spaltung der hochsiedenden Rückstände der Direktsynthese nach Müller-Rochow in Silane mit Chlorwasserstoff in einer Wirbelschicht aus siliciumdioxidhaltigen, keramischen oder mineralischen, aluminiumfreien Partikeln, deren Siliciumdioxidgehalt mindestens 90 Gew.-% beträgt.

2. Verfahren nach Anspruch 1, bei dem Disilane der allgemeinen Formel R_{c}Cl_{6-c}Si₂, mit c = 0 - 6, R = Alkyl, gespalten werden.

3. Verfahren nach Anspruch 1 oder 2, bei dem die siliciumdioxidhaltigen, aluminiumfreien Partikel ausgewählt werden aus Quarz, Keramik oder säuregewaschenem und geglühtem Sand.

4. Verfahren nach Anspruch 1 bis 3, bei dem die Korngröße der Partikel 50 µm bis 1000 µm beträgt.

5. Verfahren nach Anspruch 1 bis 4, welches bei Temperaturen von 400 bis 650°C durchgeführt wird.

## Claims

1. A process for thermal cleavage of the high-boiling residues of the direct Müller-Rochow synthesis to give silanes with hydrogen chloride in a fluidized bed of silicon dioxide-containing, aluminum-free particles.

2. The process as claimed in claim 1, in which disilanes of the general formula R_{c}Cl_{6-c}Si₂ where c = 0-6, R = alkyl are cleaved.

3. The process as claimed in claim 1 or 2, in which the silicon dioxide-containing, aluminum-free particles are selected from quartz, ceramic and acid-washed and calcined sand.

4. The process as claimed in claims 1 to 3, in which the particle size of the particles is 50 µm to 1000 µm.

5. The process as claimed in claims 1 to 4, which is performed at temperatures of 400 to 650°C.

## Revendications

1. Procédé de clivage thermique des résidus à point d'ébullition élevé de la synthèse directe selon Müller-Rochow en silanes avec du chlorure d'hydrogène dans un lit fluidisé constitué de particules céramiques ou minérales exemptes d'aluminium, contenant du dioxyde de silicium, dont la teneur en dioxyde de silicium est d'au moins 90 % en poids.

2. Procédé selon la revendication 1, dans lequel des disilanes de formule générale R_{c}Cl_{6-c}Si₂, avec c = 0 à 6, R = alkyle, sont clivés.

3. Procédé selon la revendication 1 ou 2, dans lequel les particules exemptes d'aluminium et contenant du dioxyde de silicium sont choisies parmi le quartz, la céramique ou le sable lavé avec un acide et recuit.

4. Procédé selon les revendications 1 à 3, dans lequel la granulométrie des particules est de 50 µm à 1 000 µm.

5. Procédé selon les revendications 1 à 4, qui est mis en oeuvre à des températures de 400 à 650 °C.
